# EUROPÄISCHE PATENTANMELDUNG

(11) **EP 2 717 273 A1**
(43) Veröffentlichungstag der Anmeldung: **09.04.2014**
(21) Anmeldenummer: 12306197.0
(22) Anmeldetag: 02.10.2012
(51) Int. Cl.: H01B 3/44, C08L 23/28, C08L 47/00, H01B 7/00, H01B 7/18

(54) **Widerstandsfähige Mantelmischung für Kabel und Leitungen**

(71) Anmelder: Nexans, 75008 Paris (FR)
(72) Erfinder: Niehaus, Armin, 5911 GE Venlo (NL); Dr. Cornelissen, Christian, 63110 Rodgau (DE)
(74) Vertreter: Feray, Valérie

(57) **Zusammenfassung**

Die Erfindung betrifft eine Mantelmischung bzw. eine Leitung, die die vernetzte Mantelmischung aufweist, ,die als Polymerbasis chloriertes Polyethylen (CPE), Chloropren, insbesondere jeweils mit einem Chlorgehalt von 30 - 40% und jeweils mit einer Mooney-Viskosität von ca. 80 - 105 Mooney-Einheiten (ME) bei 121°C (38,1mm Rotor) oder eine Mischung dieser aufweist, optional mit zusätzlichem Haftvermittler und zeichnet sich durch einen Gehalt an Fasern aus, die in der Mischung durch einen Mischvorgang verteilt sind.

## Beschreibung

Die Erfindung betrifft eine Mantelmischung für Kabel und Leitungen, die nach der Vernetzung hochfeste Vulkanisate ergibt, und die insbesondere für den Einsatz als Mantelmischung in Leitungen und Kabeln bestens geeignet ist, insbesondere zur Verwendung als vernetzte Mantelmischung für mechanisch hoch beanspruchte Kabel, z.B. für Bergbaukabel und Krankabel.

Die Mantelmischung ist auf Basis von chloriertem Polyethylen (CPE) und/oder Chloropren als vernetzbarem Bestandteil zusammengesetzt und zeichnet sich dadurch aus, dass die mit der Mischung hergestellten Mäntel eine hohe mechanische Widerstandsfähigkeit haben, insbesondere einen signifikant höheren Mod50-Wert oder Mod200-Wert, der die Kraft für eine 50%-ige bzw. 200%-ige Dehnung der Mischung beschreibt, als vergleichbare Zusammensetzungen.

### Stand der Technik

Die WO 2010/002878 beschreibt eine Überlandleitung, die um einen Kern aus faserverstärktem Polymer einen rohrförmigen Leiter aufweist.

### Aufgabe der Erfindung

Die Aufgabe der Erfindung liegt darin, eine Mantelmischung auf Basis von Chloropren und/oder CPE bereitzustellen, die eine hohe mechanische Belastbarkeit aufweist.

### Allgemeine Beschreibung der Erfindung

Die Erfindung löst die Aufgabe mit den Merkmalen der Ansprüche und insbesondere mit einer Mantelmischung, bzw. einer Leitung, die die vernetzte Mantelmischung aufweist, insbesondere mit einem Außenmantel aus der vernetzten Mantelmischung. Die Mantelmischung weist als Polymerbasis chloriertes Polyethylen (CPE), Chloropren, insbesondere jeweils mit einem Chlorgehalt von 30 - 40% und jeweils mit einer Mooney-Viskosität von ca. 80 - 105 Mooney-Einheiten (ME) bei 121°C (38,1mm Rotor) oder eine Mischung dieser auf, optional mit zusätzlichem Haftvermittler und zeichnet sich durch einen Gehalt an Fasern aus, die in der Mischung durch einen Mischvorgang verteilt sind. Die Mantelmischung mit dem Gehalt an Fasern können bei einem Herstellungsverfahren für Kabel oder Leitungen verwendet werden, insbesondere durch Extrusion auf eine unterliegende Schicht eines Kabels aufgebracht und anschließend vernetzt werden. Entsprechend betrifft die Erfindung auch ein Verfahren zur Herstellung von Kabeln und Leitungen, bei dem die faserhaltige Mantelmischung durch Extrusion zu einem Mantel geformt und vernetzt wird. Ein besonderer Vorteil dieser Mantelmischung liegt darin, dass sie mit einem herkömmlichen Extrusionsverfahren verarbeitet werden kann, nach Extrusion eine ausreichend glatte und geschlossene Oberfläche des Mantels ergibt und eine sehr hohe mechanische Widerstandsfähigkeit aufweist, insbesondere für geringe Verformungen. Entsprechend ist die Polymermischung insbesondere zur Verwendung als Mantel für Kabel und Leitungen bei geringen Verformungen geeignet. Geringe Verformungen sind z.B.Torsion oder circumferentiale Dehnungen im Bereich bis max. 100% auf einem Weg von 2 cm, z.B. bei einer Frequenz von 1 bis 60 min⁻¹, insbesondere bis 10 min⁻¹.

Die Mantelmischung weist auf oder besteht aus Chloropren und/oder CPE oder einer Mischung von Chloropren und/oder CPE mit zumindest einem anderen vernetzbaren organischen Polymer mit den angegebenen Füllstoffen und Zuschlagstoffen, insbesondere mit nicht polymerisierbaren Zuschlagstoffen, z.B. Verarbeitungshilfsmittel und Weichmacher, sowie einem Vernetzungssystem, das insbesondere ein Vernetzungsmittel und/oder Vulkanisationsbeschleuniger, optional einen Verzögerer und einen Aktivator (vorzugsweise ZnO) aufweist, sowie Haftvermittler. Bevorzugt sind als Zuschlagstoffe Stabilisator, Alterungsschutzmittel, optional Farbmittel, vorzugsweise mit einem Aufheller, enthalten. Als Füllstoff ist Kieselsäure (Silica), bevorzugt mit hoher spezifischer Oberfläche enthalten. Die hohe spezifische Oberfläche der Kieselsäure beträgt vorzugsweise zumindest 140 qm/g, insbesondere 160 qm/g und Fasern, die bevorzugt synthetische Fasern sind, insbesondere Polyamidfasern, vorzugsweise mit einem Durchmesser im Bereich von 10 bis 100µm. Bevorzugt weisen die Fasern eine mittlere Länge von 1 bis 2 mm auf. Die Fasern können trocken als Faserpulpe (besteht aus trockenen Fasern) oder nach Mischen mit einem Verarbeitungshilfsmittel und/oder Haftvermittler in die Mischung eingearbeitet werden, z.B. einen Gehalt an Maleinsäureanhydrid von 1-3% aufweisen.

### Bevorzugt weist die Mantelmischung

- 100 phr CPE und/oder Chloropren,
- Stabilisator, z.B. Magnesiumoxid, insbesondere zu 5 bis 15 phr, bevorzugt zu 6-8 phr,
- Alterungsschutzmittel, bevorzugt zu 1-7 phr, bevorzugter zu 1-3 phr, insbesondere zu 1-2 phr,
- Ozonschutzmittel, insbesondere zu 1 phr,
- mineralischer Füllstoff, z.B. kalizinierte oder pyrogene Kieselsäure, vorzugsweise zu 25 - 35 phr, bevorzugt zu 30 phr,
- Hartkaolin, vorzugsweise zu 45 - 55 phr, bevorzugt zu 50 phr,
- Farbstoff, beispielsweise zu insgesamt 3 - 6 phr, bevorzugt Titandioxid zu 3 - 5 phr, optional in Mischung mit einem weiteren Farbstoff, z.B. zu 0,8 - 1,6, insbesondere 1,2 phr,
- Weichmacher, bevorzugt Phthlalatweichmacher zu 20 - 45 phr, bevorzugt zu 20 - 30 phr, bevorzugter zu 22 - 24 phr,
- Verarbeitungshilfsmittel (Struktol WB 222), z.B. zu 1 - 3 phr, bevorzugt zu 2 phr, und zu 2 - 3 phr, bevorzugt zu 2,5 phr, beispielsweise Stearinsäure und/oder Paraffin,
- optional Haftvermittler, z.B. ein funktionalisiertes poly-α-Olefin (POE) gepfropft mit 1 bis 3 Gew.-%, insbesondere 2 bis 3 Gew.-% Maleinsäureanhydrid,
- ein Startersystem, beispielsweise 2 - 3 phr Koaktivator in Mischung mit 7 - 8 phr Peroxid und
- Faserpulpe, zu zumindest 0,5 phr, bevorzugt 1 - 4 phr, bevorzugter 1,5 - 2 phr auf oder besteht daraus.

Die in den Mischungen angegebenen Teile sind als phr (parts per hundred rubber) angegeben, d.h. die Gewichtsteile der Bestandteile sind auf 100 Gewichtsteile Polymer in der Mischung bezogen.

Die erfindungsgemäße Mantelmischung hat nach Vernetzung gute mechanische Eigenschaften, insbesondere eine hohe Widerstandsfähigkeit gegen Zug- und Torsionsbelastungen.

Generell zeigt sich, dass der Gehalt an Fasern gegenüber einer ansonsten identischen Mischung jedoch ohne Fasern den Mod50 - Wert und den Mod200 - Wert signifikant erhöht, z.B. um 50%, bevorzugt um 100% gegenüber dem Wert für eine faserfreie Vergleichsmischung.

Die Fasern sind synthetische Polymerfasern, bevorzugt aus Polyamid, insbesondere aus Aramid, erhältlich zum Beispiel unter der Bezeichnung Twaron oder Kevlar.

In einer Ausführungsform weist die Mantelmischung keinen Haftvermittler auf, da sich gezeigt hat, dass auch ohne Haftvermittler gute Festigkeitswerte erreicht werden. Insbesondere weist die Mantelmischung im unvernetzten Zustand eine gute Verarbeitbarkeit auf, sodass das Verfahren zur Herstellung von Leitungen mit einem Mantel aus der vernetzten Mantelmischung unter Verwendung üblicher Kneter und Extruder durchführbar ist.

Alterungsschutzmittel können z.B. Pentaerythritol-bis(tetrahydrobenzaldehydacetal), insbesondere zu 1-2 phr, bevorzugt zu 1,5 phr, Antioxidanz, insbesondere zu 0,7-1,3 phr, bevorzugt 1 phr, z.B. eine Diphenylverbindung, bevorzugt zu 2 phr sein umfassen oder daraus bestehen.

Verarbeitungshilfsmittel können z.B. Ozonschutzwachs, bevorzugt zu 3-6 phr, bevorzugter 4 phr, z.B. mikrokristallines Wachs, Paraffin, bevorzugt zu 4-8 phr, bevorzugter zu 5-7 phr, Stearinsäure, insbesondere zu 0-1 phr, und/oder Silikonöl und Mischungen dieser, insbesondere zu insgesamt 8 bis 15 phr, umfassen oder daraus bestehen.

Das Vernetzungssystem kann insbesondere Verzögerer, bevorzugt zu 0,9-1,5 phr, bevorzugter zu 1,2 phr, z.B. Dibenzothiazyldisulfid, Vernetzungsmittel und/oder Vulkanisationsbeschleuniger, insbesondere zu 0,95-1,55 phr, bevorzugter zu 1,25 phr, z.B. N,N'-Ethylenthioharnstoff oder 1,0 -4,0 phr 3-Methylthiazolidin-thion-2 (MTT) oder 2.4.6-trimercapto-S-triadine (TCY), Vernetzer/Alterungsschutzmittel, insbesondere zu 1,4-2 phr, bevorzugter zu 1,7 phr, z.B. Methylmercaptobenzimidazol, das insbesondere zu 70% in Elastomerbinder und Dispergator enthalten ist, sowie Aktivator, insbesondere 4-6 phr, bevorzugt 5 phr, z.B. ZnO, und Mischungen umfassen oder daraus bestehen.

Zur Herstellung der Mischung werden deren Bestandteile gemischt, z.B. in einem Kneter. Die Fasern können separat zugesetzt werden, vorzugsweise werden die Fasern mit zumindest einem Anteil des Weichmachers, optional zusätzlich mit zumindest einem Anteil des Haftvermittlers vorgemischt und diese Mischung wird den weiteren Bestandteilen der Mischung zugesetzt.

Die erfindungsgemäße Mantelmischung weist nach Vernetzung eine hohe Beständigkeit gegenüber Torsions- und Zugbelastungen auf, wobei der Gehalt an Fasern die elektrischen Eigenschaften und die thermische und chemische Beständigkeit im Vergleich zu einer vernetzen Mischung, die keine Fasern enthält und ansonsten identisch ist, nicht beeinträchtigen. Generell bevorzugt erfolgt die Vernetzung im Anschluß an die Extrusion der Mischung bei 150°C, insbesondere bei 180 bis 220°C, bevorzugt bei 200°C und von zumindest 14 bis 22 bar, bevorzugt 20 bar. Bevorzugt erfolgt die Vernetzung für eine Zeit von tc90 x 1,4 bis 2, insbesondere für tc90 x 1,4; dabei ist tc90 bestimmt als Zeit bis zur Erreichung von 90% des Maximums der Vernetzungsisotherme.

### Genaue Beschreibung der Erfindung

Die erfindungsgemäße Mantelmischung wird nun anhand von Beispielmischungen und deren mechanischen Eigenschaften, insbesondere der hohen mechanischen Widerstandsfähigkeit beschrieben.

Die Tabelle 1 zeigt erfindungsgemäße Mischungen. Die Mischungsbestandteile wurden im Standardzyklus in einer Stufe in einem 2,9 L-Laborkneter mit tangierendem Rotorsystem und einem Füllfaktor von 60 - 80% gemischt, zu Testplatten ausgeformt und durch Erwärmen auf 180 °C bei 230 bar Hydraulikdruck, der über einen beheizten Stempel aufgebracht wird, für tc90x1,4 min vernetzt. Der tc90-Wert wird aus der Rheometerkurve abgegriffen.

**Tabelle 1: Erfindungsgemäße Mischung und Vergleichsmischung**

| Inhaltsstoff (phr) | Vergleichsmischung | erfindungsgemäße Mischung |
|---|---|---|
| CPE | 100 | 100 |
| Stabilisator (MgO) | 7 | 7 |
| Alterungsschutzmittel | 2 | 2 |
| Füllstoff (Kieselsäure) | 30 | 30 |
| Hartkaolin | 50 | 50 |
| Farbstoff | 5,2 | 5,2 |
| Weichmacher (Phthlalatweichmacher) | 43 | 23 |
| Verarbeitungshilfsmittel (Ozonschutzwachs, Paraffin, Stearinsäure) | 4,5 | 4,5 |
| Haftvermittler (mit 3 Gew.-% Maleinsäure gepfropftes PE) | 1,5 | 0 |
| Startersystem | 10,4 | 10,4 |
| Fasern (Aramid) | 0 | 3 |

Die Aramidfasern hatten eine mittlere Länge von ca. 2mm und einen Durchmesser von 0,2-0,4 mm.

Eine Messung der Belastbarkeit nach EN 60811-1-1 für die aufzubringende flächenbezogene Kraft bei 200% Dehnung des vernetzten Teststreifens ergab für die erfindungsgemäße Mischung einen Mod200-Wert von 5,7 MPa und für die Vergleichsmischung einen Mod200-Wert von <3 mPa, der deutlich niedriger ist.

Bei Zusatz von Haftvermittler zur erfindungsgemäßen Mischung stiegen die Mod200-Werte noch an.

## Patentansprüche

1. Polymermischung für elektrische und/oder optische Kabel und Leitungen, die die folgenden Bestandteile enthält:
- 100 phr CPE und/oder Chloropren,
- 5 bis 10 phr Stabilisator
- 1 bis 7 phr Alterungsschutzmittel,
- Ozonschutzmittel,
- 25 bis 35 phr mineralischer Füllstoff,
- 45 bis 55 phr Hartkaolin,
- Farbstoff,
- 20 - 45 phr Weichmacher,
- Verarbeitungshilfsmittel,
- 0 bis 1,5 phr Haftvermittler,
- ein Startersystem,
- mindestens 0,5 phr synthetische Fasern.

2. Polymermischung nach Anspruch 1, **dadurch gekennzeichnet, dass** der mineralische Füllstoff kalzinierte oder pyrogene Kieselsäure ist.

3. Polymermischung nach einem der voranstehenden Ansprüche, **dadurch gekennzeichnet, dass** die Fasern eine mittlere Länge von 1,5 bis 3 mm aufweisen und in der Polymermischung dispergiert sind.

4. Polymermischung nach einem der voranstehenden Ansprüche, **dadurch gekennzeichnet, dass** der Stabilisator MgO ist, das Alterungsschutzmittel Pentaerythritol-bis(tetrahydrobenzaldehydacetal), eine Diphenylverbindung aufweist und das Vernetzungssystem einen Verzögerer, ein Vernetzungsmittel und/oder Vulkanisationsbeschleuniger und einen Aktivator aufweist.

5. Polymermischung nach einem der voranstehenden Ansprüche, **dadurch gekennzeichnet, dass** der Haftvermittler ein funktionalisiertes Polymer, insbesondere ein mit Maleinsäure gepfropftes poly-α-Olefin ist.

6. Polymermischung nach einem der voranstehenden Ansprüche, **dadurch gekennzeichnet, dass** das Verarbeitungshilfsmittel eine Mischung aus Ozonschutzwachs, Paraffin, Stearinsäure und/oder Silikonöl ist.

7. Polymermischung nach einem der voranstehenden Ansprüche, **dadurch gekennzeichnet, dass** sie aus
- 100 phr CPE und/oder Chloropren,
- 5 bis 10 phr Stabilisator
- 1 bis 7 phr Alterungsschutzmittel,
- Ozonschutzmittel,
- 25 bis 35 phr mineralischer Füllstoff,
- 45 bis 55 phr Hartkaolin,
- Farbstoff,
- 20 - 45 phr Weichmacher,
- Verarbeitungshilfsmittel,
- 0 bis 1,5 phr Haftvermittler,
- ein Startersystem,
- mindestens 0,5 phr synthetischen Fasern besteht.

8. Polymermischung nach einem der voranstehenden Ansprüche, **dadurch gekennzeichnet, dass** sie nach Vernetzung einen Mod50-Wert von mindestens 2 MPa und einen Mod200-Wert von mindestens 5 MPa aufweist.

9. Polymermischung nach einem der voranstehenden Ansprüche, **dadurch gekennzeichnet, dass** die synthetischen Fasern Aramidfasern mit einer mittleren Länge von 1,5 bis 3mm sind.

10. Elektrische und/oder optische Leitung oder Kabel, **gekennzeichnet durch** einen Außenmantel aus einer vernetzten Polymermischung nach einem der voranstehenden Ansprüche.

11. Verwendung einer Polymermischung nach einem der Ansprüche 1 bis 8 als Mantel einer elektrischen und/oder optischen Leitung oder eines Kabels.

12. Verwendung nach Anspruch 11, **dadurch gekennzeichnet, dass** der Mantel einer Torsionsbelastung unter Winkeln von 2 bis max. 20 ° unterliegt.

13. Verfahren zur Herstellung einer Leitung oder eines Kabels durch Extrudieren einer Polymermischung um zumindest einen elektrischen und/oder optischen Leiter und Vernetzen der Polymermischung, **dadurch gekennzeichnet, dass** die Polymermischung eine nach einem der Ansprüche 1 bis 10 ist, die durch Mischen ihrer Bestandteile hergestellt wird, extrudiert wird und anschließend vernetzt wird.

14. Verfahren nach Anspruch 13, **dadurch gekennzeichnet, dass** die Mischung zu einem Mantel der Leitung oder des Kabels extrudiert wird und durch Erwärmen vernetzt wird.

15. Verfahren nach einem der Ansprüche 13 oder 14, **dadurch gekennzeichnet, dass** das Erwärmen bis 150 bis 220°C bei einem Dampfdruck von 14 bis 22 bar erfolgt.
